# EUROPEAN PATENT APPLICATION

(11) **EP 1 808 498 A1**
(43) Date of publication of application: **18.07.2007**
(21) Application number: 05805211.9
(22) Date of filing: 26.10.2005
(51) Int. Cl.: C21B 11/00, C21B 13/10, C22B 1/16

(54) **PROCESS FOR PRODUCING MOLTEN IRON AND APPARATUS THEREFOR**

(30) Priority: 29.10.2004 JP 2004316532; 18.02.2005 JP 2005042716
(71) Applicant: KABUSHIKI KAISHA KOBE SEIKO SHO, Kobe-shi, Hyogo 651-8585 (JP)
(72) Inventor: TANAKA, Hidetoshi KABUSHIKI KAISHA KOBE SEIKO SHO, Kobe-shi, Hyogo 6518585 (JP); MIMURA, Tsuyoshi KABUSHIKI KAISHA KOBE SEIKO SHO, Kobe-shi, Hyogo 6518585 (JP); HARADA, Takao KABUSHIKI KAISHA KOBE SEIKO SHO, Kobe-shi, Hyogo 6518585 (JP); HAJIKA, Kiminori KABUSHIKI KAISHA KOBE SEIKO SHO, Kobe-shi, Hyogo 6518585 (JP); YASO, Tadashi KABUSHIKI KAISHA KOBE SEIKO SHO, Kobe-shi, Hyogo 6518585 (JP); KURAKAKE, T. KABUSHIKI KAISHA KOBE SEIKO SHO, Kobe-shi, Hyogo 6518585 (JP)
(74) Representative: Müller-Boré & Partner Patentanwälte
(86) International application number: PCT/JP2005/019701
(87) International publication number: WO 2006/046606

(57) **Abstract**

A bedding carbonaceous material H is charged onto a hearth of a rotary hearth furnace 14, carbonaceous-material containing pellets D containing powdery iron ore A and powdery coal B are placed on the bedding carbonaceous material H, and the hearth is caused to pass inside the rotary hearth furnace 14 to heat and reduce the carbonaceous-material containing pellets D to solid reduced iron F and to heat and dry the bedding carbonaceous material H by distillation into char G. Subsequently, the solid reduced iron F and the char G are charged into an iron-melting furnace 16 without being substantially cooled, and an oxygen gas is blown into the iron-melting furnace 16 to melt the solid reduced iron F, thereby obtaining molten iron K. At least a part of an exhaust gas M from the iron-melting furnace 16 is used as a fuel gas for the rotary hearth furnace 14 after being cooled and having dust removed.

## Description

### TECHNICAL FIELD

The present invention relates to a method and an apparatus for producing molten iron and particularly to an improved method for efficiently producing molten iron having a high iron purity by heating and reducing an iron oxide source such as iron ore together with a carbonaceous reducing agent such as coal in a molten iron production process constructed by combining a moving hearth type reducing furnace and an iron melting furnace.

### BACKGROUND TECHNOLOGY

The inventors of the present invention developed a molten iron production method for, in a molten iron production process in which a rotary hearth furnace (moving hearth type reduction furnace) and a melting furnace (iron-melting furnace) are coupled, obtaining molten iron by feeding solid reduced iron to a melting furnace after heating and reducing a compact containing iron oxide and a carbonaceous reducing agent to the solid reduced iron having a metallization degree of 60% or higher in a rotary hearth furnace, and melting the solid reduced iron while controlling the secondary combustion ratio in the melting furnace to be 40% or lower by burning a carbonaceous material fed as a fuel with oxygen to melt the solid reduced iron. They also indicated that a part of or all of the carbonaceous material fed as the fuel into the melting furnace could be fed as a bedding carbonaceous material onto the hearth of the rotary hearth furnace (see Japanese Unexamined Patent Publication No. 2004-176170).

However, only qualitative actions and effects were indicated concerning the method using the bedding carbonaceous material, and specific operating conditions for further reducing the fuel specific consumption while stabilizing the operations of the rotary hearth furnace and the melting furnace were still uncertain. Thus, there was a room for improvement.

On the other hand, the inventors of the present invention also proposed a method for, in a process for producing metallic iron by feeding a raw material containing an iron-oxide containing substance and a carbonaceous reducing agent after laying a powdery bedding carbonaceous material for atmospheric adjustment on the hearth of the rotary hearth furnace, and heating the raw material in the furnace to reduce and melt the raw material, recycling the bedding carbonaceous material discharged from the rotary hearth furnace to be used again in the rotary hearth furnace, thereby preventing such a phenomenon that the powdery bedding carbonaceous material is caked into a cracker-shaped material (see Japanese Unexamined Patent Publication No. 2003-213312).

However, the above process includes no melting furnace and produces the metallic iron only using the rotary hearth furnace, and physical and chemical properties required for the bedding carbonaceous material, the recycling conditions of the bedding carbonaceous material and the like cannot be applied as they are to the molten iron production process disclosed in the former prior art document in which the rotary hearth furnace and the melting furnace are coupled.

### SUMMARY OF THE INVENTION

Accordingly, an object of the present invention is to provide a molten iron producing method which can further reduce the fuel specific consumption while stabilizing the operations of a moving hearth type reducing furnace and an iron-melting furnace in a molten iron production process constructed by combining the moving hearth type reducing furnace and the iron-melting furnace, and a suitable molten iron producing apparatus.

The present invention is directed to a molten iron producing method for producing molten iron using a molten iron production process constructed by combining a moving hearth type reducing furnace and an iron-melting furnace, comprising the following steps (1) to (4):
(1) reducing furnace charging step of charging a bedding carbonaceous material onto a hearth of the moving hearth type reducing furnace and placing carbonaceous-material composite agglomerates containing a powdery iron oxide source and a powdery carbonaceous reducing agent on the bedding.carbonaceous material,
(2) reduction step of moving the hearth inside the moving hearth type reducing furnace, thereby heating and reducing the carbonaceous-material composite agglomerates to solid reduced iron and heating and drying the bedding carbonaceous material by distillation into char,
(3) melting furnace charging step of charging the solid reduced iron and the char into the iron-melting furnace without being substantially cooled, and
(4) melting step of blowing an oxygen-containing gas into the iron-melting furnace to melt the solid reduced iron into the molten iron.

According to the present invention, the hearth can be more securely protected by using the bedding carbonaceous material to avoid troubles such as the peeling of the hearth. Therefore, the moving hearth type reducing furnace can be continuously operated over a longer period of time. Further, since the char after devolatization contains no volatile content, the damage of the refractory by the combustion of the volatile content in the iron-melting furnace can be prevented, thereby extending the lift of the refractory of the iron-melting furnace. Further, the reoxidation of the solid reduced iron in the moving hearth type reducing furnace can be prevented by using the bedding carbonaceous material, whereby a high metallization degree of, e.g. 92 % or higher, can be achieved and the carbonaceous material consumption in the iron-melting furnace can be considerably reduced.

As a result, the specific fuel consumption can be further reduced while the operations of the moving hearth type reducing furnace and the iron-melting furnace are more stabilized.

### BRIEF DESCRIPTION OF THE DRAWINGS

FIG. 1 is a flow diagram of a molten iron production process showing one embodiment of the invention,
FIG. 2A and 2B are sections diagrammatically showing a state near a hearth of a rotary hearth furnace,
FIG. 3A and 3B are graphs showing relationships between the thickness of a bedding carbonaceous material and the metallization degree of solid reduced iron,
FIG. 4 is a graph showing relationships between the carbon content and the crushing strength of the solid reduced iron,
FIG. 5 is a flow diagram showing one embodiment of a batch charging method according to the invention,
FIGS. 6A and 6B are sections showing a state of a gas flow in the iron-melting furnace according to the invention, wherein FIG. 6A shows a basic construction and FIG. 6B shows an example in which a baffle plate is disposed,
FIGS. 7A and 7B are sections showing a state of a gas flow in the iron-melting furnace according to the invention, wherein FIG. 7A shows an example in which a guide plate is disposed and
FIG. 7B shows an example in which a guide duct is disposed,
FIG. 8 is a graph showing a particle size distribution of solid particles, and
FIG. 9 is a graph showing a relationship between an oxygen gas blowing rate and the scattering rate of solid particles.

### DETAILED DESCRIPTION OF THE PREFERRED EMBODIMENTS OF THE INVENTION

Hereinafter, the present invention is described in detail with reference to the drawings showing one embodiment thereof.

### [First Embodiment]

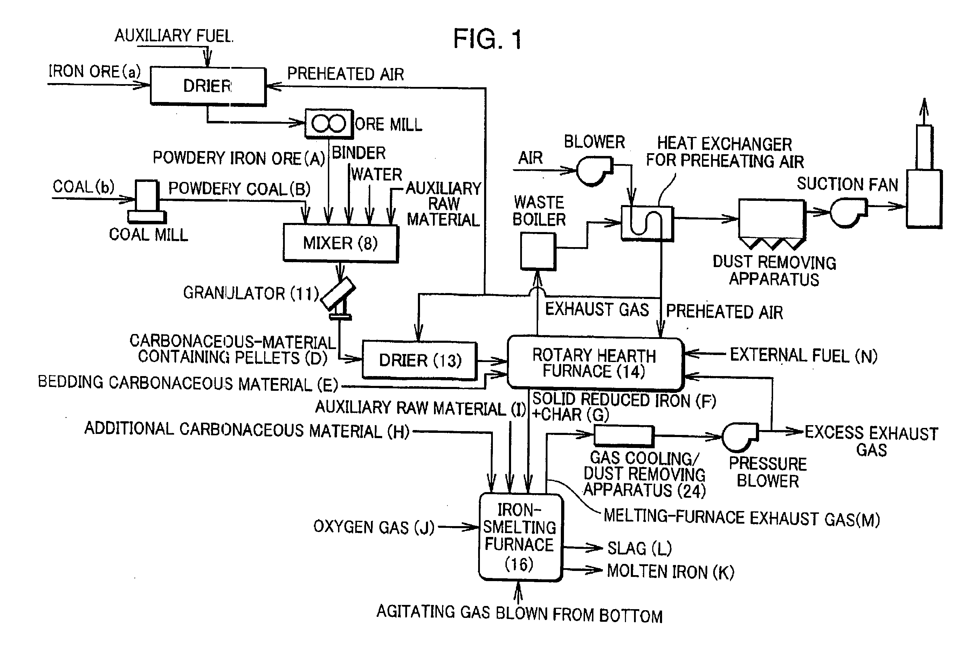

FIG. 1 is a flow diagram of a molten iron production process showing one embodiment of the present invention, wherein this molten iron production process is constructed by coupling a rotary hearth furnace 14 as a moving hearth type reducing furnace and an iron-melting furnace 16.

Iron ore "a" as an iron oxide source and coal b as a carbonaceous reducing agent are, if necessary, separately crushed into particles having diameters of approximately below 1 mm. The thus obtained powdery iron ore A as a powdery iron oxide source and powdery coal B as a powdery carbonaceous reducing agent are mixed at a specified ratio, a suitable amount of binder and/or a suitable amount of moisture are added if necessary (further, all or a part of an auxiliary raw material I as a slag forming agent to be added in the iron-melting furnace 16 may be added here), and these are mixed by a mixer 8. Thereafter, the mixed compound is granulated to have a particle diameter of about 6 to 20 mm in a granulator 11, thereby obtaining carbonaceous-material containing pellets D as carbonaceous-material composite agglomerates. It should be noted that a volatile content of the coal (carbonaceous reducing agent) b is desirably 30 mass % or lower because the carbonaceous-material containing pellets D are likely to burst upon being heated in the rotary hearth furnace 14 if the volatile content is excessively high.

The carbonaceous-material containing pellets D are preferably dried in a drier 13 until the moisture content thereof becomes 1 mass % or lower in order to prevent the bursting in the rotary hearth furnace 14.

### (1) Reducing furnace charging step

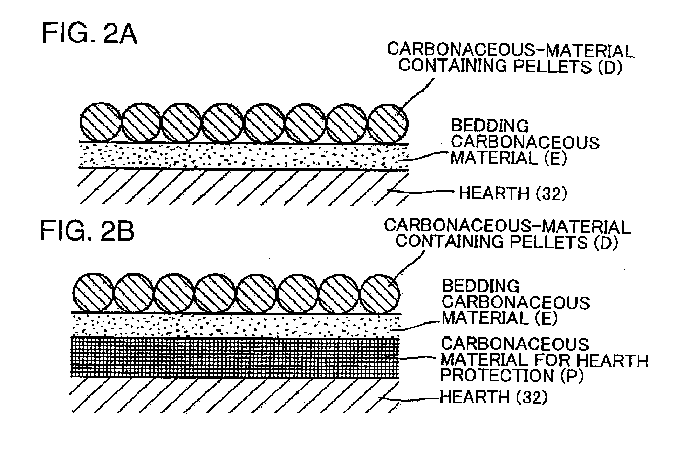

Subsequently, for example, coal as a bedding carbonaceous material E is charged onto a hearth 32 of the rotary hearth furnace 14 to have a specified thickness as diagrammatically shown in FIG. 2A, and the carbonaceous-material containing pellets D are placed on this bedding carbonaceous material E to have the thickness of two layers or less.

As a means for charging the bedding carbonaceous material E onto the hearth 32 in this way (bedding charging means) can be used a means for quantitatively dispensing the bedding carbonaceous material E, for example, from an intermediate hopper disposed above the rotary hearth furnace 14 and feeding the dispensed bedding carbonaceous material onto the hearth 32 via a charging pipe, and dispersing the fed bedding carbonaceous material E along the width direction of the hearth 32 by means of a dispersion screw. As a means for placing the carbonaceous-material containing pellets D on this bedding carbonaceous material E (raw-material charging method) can be used a means having a construction similar to the bedding charging means, including an intermediate hopper, a charging pipe and a dispersion screw and disposed downstream from the bedding charging means with respect to a moving direction of the hearth 32.

The thickness of the bedding carbonaceous material E charged onto the hearth 32 is preferably 1 to 10 mm. If this thickness is below 1 mm, it is difficult to securely cover the entire outer surface of the hearth 32 and a reoxidation preventing effect may become insufficient. On the other hand, if this thickness exceeds 10 mm, an effect of heating the carbonaceous-material containing pellets D from their bottom surfaces via the outer surface of the hearth 32 is reduced and an amount of the carbonaceous material charged into the iron-melting furnace 16 becomes excessive, resulting in a higher possibility of increasing the fuel specific consumption. The thickness of the bedding carbonaceous material E is more preferably 2 to 5 mm.

The average particle diameter of the bedding carbonaceous material E is preferably 1 to 5 mm. If the average particle diameter is below 1 mm, the bedding carbonaceous material is likely to disperse upon being changed into the rotary hearth furnace 14 and the iron-melting furnace 16, thereby reducing a carbonaceous material yield. On the other hand, if the average particle diameter exceeds 5 mm, it is approximate to the upper limit of the preferable thickness of the bedding carbonaceous material E and it becomes difficult to lay the bedding carbonaceous material E at a uniform thickness. In addition, clearances between the carbonaceous particles become larger and the carbonaceous-material containing pellets D enter these clearances. Thus, it becomes difficult to uniformly bed the carbonaceous-material containing pellets D on the layer of the bedding carbonaceous material E, thereby increasing a possibility of leading to reductions in productivity and metallization degree. The average particle diameter of the bedding carbonaceous material D is more preferably 2 to 4 mm.

The crushed coal b may be sieved using a specified particle diameter (sieve mesh of, e.g. 1 mm) as a criteria, and the powdery material below the sieve may be used as the powdery carbonaceous reducing agent B and the one above the sieve may be used as the bedding carbonaceous material E.

The Giesler's maximum fluidity MF of the bedding carbonaceous material E preferably satisfies a relationship: logMF ≦ 2. If logMF exceeds 2, the carbonaceous particles are excessively softened and molten upon being heated in the rotary hearth furnace 14 and deposit is likely to be formed on the hearth 32. The Giesler's maximum fluidity MF more preferably satisfies a relationship: logMF ≦ 1.

The volatile content of the bedding carbonaceous material E is preferably 10 mass % or higher by dry weight. This is because coal such as anthracite coal having less volatile content has a high apparent density due to its dense structure and is likely to burst to be powdered despite its less volatile content.

The volatile content of the bedding carbonaceous material E is preferably 50 mass % or lower, more preferably 40 mass % or less by dry weight. The volatile content in the bedding carbonaceous material E is almost completely devolatized upon being heated in the rotary hearth furnace 14, and can be used as a fuel gas in the rotary hearth furnace 14. However, if the volatile content is excessive, more combustible gas than necessary is produced from the bedding carbonaceous material at an initial stage of reduction in the rotary hearth furnace 14 and the unconsumed combustible gas is discharged while remaining in the exhaust gas from the rotary hearth furnace 14, which leads to a reduced energy efficiency. Further, if the volatile content is excessive, the carbonaceous material becomes lighter due to the devolatization of the volatile content caused by heating and is likely to scatter upon being discharged from the rotary hearth furnace 14, thereby leading to a reduced carbonaceous material yield. The bedding carbonaceous material E is desirably dried before being charged into the rotary hearth furnace 14. A carbonaceous material whose volatile content is about 50 mass % or higher like brown coal is dried, it becomes porous and easier to ignite and, therefore, is difficult to handle.

It is not necessary to use only one kind of bedding carbonaceous material having the above preferable amount of the volatile content, and two or more kinds of carbonaceous materials having different amounts of volatile contents may be used by being suitably mixed. Carbonaceous materials already heat-treated in a separate process such as coke powder or petroleum coke may be used as the one to be mixed.

### (2) Reduction step

The carbonaceous-material containing pellets D and the bedding carbonaceous material E placed in layers on the hearth 32 in this way are caused to pass inside the rotary hearth furnace 14 heated at an atmospheric temperature of 1100°C to 1450 °C more preferably 1250°C to 1450°C for a residence time of 6 min., more preferably 8 min. This causes the carbonaceous-material containing pellets D to be heated in the rotary hearth furnace 14, whereby the iron oxide in the carbonaceous-material containing pellets D is reduced by the carbonaceous reducing agent to be metallized, thereby becoming solid reduced iron F. The metallization degree of the thus obtained solid reduced iron F is 92 % or higher, and the carbon content thereof is preferably 10 mass % or lower, more preferably 5 mass % or lower. On the other hand, the bedding carbonaceous material E is heated in the rotary hearth furnace 14 to have the volatile content thereof devolatized (dried by distillation), thereby becoming char G. The devolatized volatile content is burnt in the rotary hearth furnace 14 to be effectively used as a fuel. As a means (heating means) for heating the carbonaceous-material containing pellets D and the bedding carbonaceous material E can be used, for example, a plurality of burners (not shown) disposed at an upper part of the side wall of the rotary hearth furnace 14.

If the atmospheric temperature is 1350°C or higher, the carbonaceous-material containing pellets D are molten on the hearth 32 to be separated into iron components and slag components. Since the carbonaceous-material containing pellets D are difficult to discharge from the rotary hearth furnace 14 while being molten, they are discharged after being cooled and solidified in the rotary hearth furnace 14. The solid reduced iron F in this case is a mixture of powdery iron and solid slag. However, it is not preferable from a viewpoint of the productivity and the energy efficiency of the entire process to cool and solidify the pellets D molten in the rotary hearth furnace 14 and melt again in the iron-melting furnace 16. Accordingly, in order to further improve the productivity and the energy efficiency of the entire process, it is desirable to discharge the carbonaceous-material containing pellets D from the rotary hearth furnace 14 before being molten on the hearth and melt them in the iron-melting furnace 16 while improving the productivity in the rotary hearth furnace 14 by setting the atmospheric temperature at 1350°C or higher during the reduction in the rotary hearth furnace 14.

In order to prevent the molten iron and the molten slag from damaging a hearth refractory in the case that the carbonaceous-material containing pellets D should be molten on the hearth 32, it is also effective to provide a layer of a carbonaceous material P for hearth protection, which is a fine carbonaceous material for preventing the permeation of the molten material between the hearth 32 and the bedding carbonaceous material E or a carbonaceous material P for hearth protection containing fine carbonaceous material as shown in FIG. 2B.

The metallization degree of the solid reduced iron F is set at 92 % or higher and the carbon content thereof is preferably set at 10 mass % or lower, more preferably at 5 mass % or lower for the following reasons.

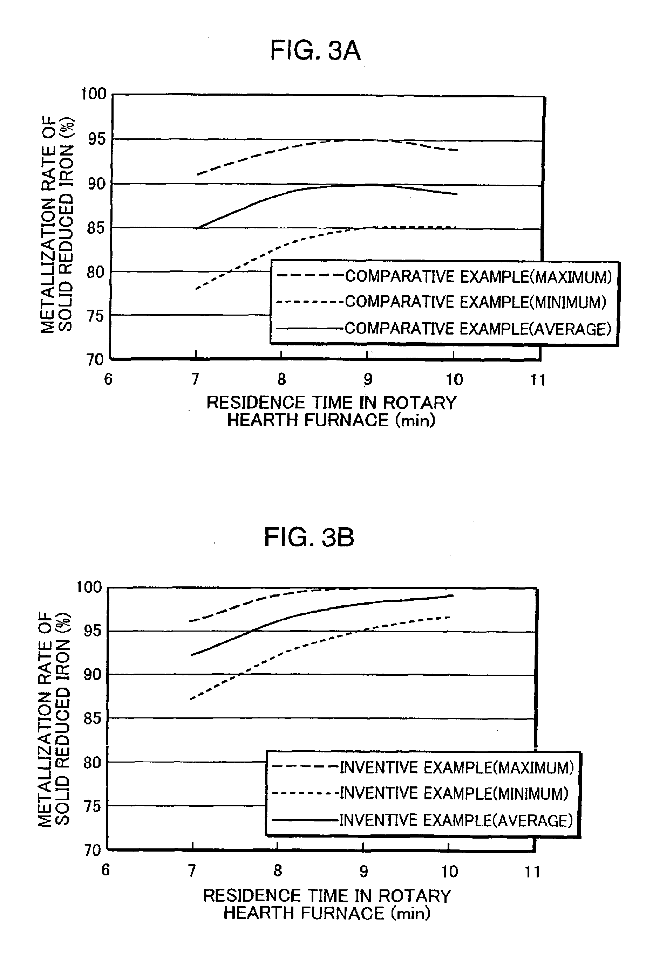

First, the reasons for setting the metallization degree at 92 % or higher are given. Specifically, the higher the metallization degree of the solid reduced iron F, the less carbon amount is necessary to metallize iron oxide (FeO, etc.) remaining in the solid reduced iron F in the iron-melting furnace 16, wherefore the entire carbonaceous material consumption in the iron-melting furnace 16 can be reduced. Thus, it is desirable to maximally increase the metallization degree. However, if the carbonaceous-material containing pellets are reduced by the rotary hearth furnace without using the bedding carbonaceous material, the solid reduced iron is reoxidized by the oxidizing atmosphere in the rotary hearth furnace. Thus, it has been conventionally very difficult to stably obtain a metallization degree of 90 % or higher as shown in FIG. 3A. Contrary to this, if the bedding carbonaceous material E is used, oxidizing gas components CO₂ and H₂O in the oxidizing atmosphere are modified into reducing gas components through reactions: CO₂+C → 2CO and H₂O+C → H₂+CO by the char G produced from the bedding carbonaceous material E, with the result that the reoxidation of the solid reduced iron F is either suppressed or prevented. Thus, a metallization degree of 92 % or higher can be easily obtained as shown in FIG. 3B, and a metallization degree of 94 % or higher can also be attained depending on the operation conditions. Therefore, the metallization degree of the solid reduced iron F is set at 92 % or higher. The more preferable metallization degree of the solid reduced iron F is 94 % or higher.

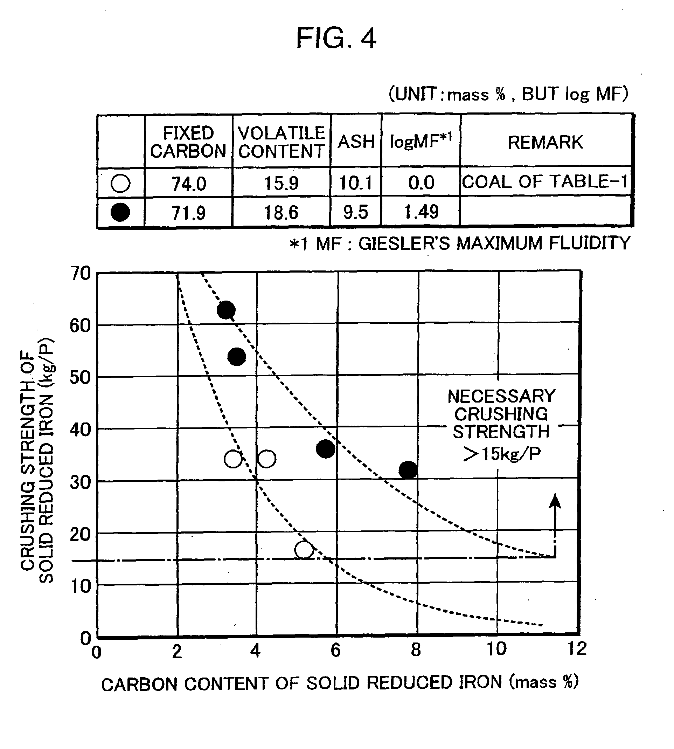

Next, reasons for setting the carbon content preferably at 10 mass % or lower, more preferably at 5 mass % or lower are given. Specifically, if the carbon content in the solid reduced iron F is high, it covers a carbon amount necessary to metallize iron oxide (FeO, etc.) remaining in the solid reduced iron F and the remaining carbon amount is used to carburize the molten iron obtained by melting the solid reduced iron. Thus, a higher carbon content is preferable from a viewpoint of the carbonaceous material consumption in the iron-melting furnace 16. However, the higher the carbon content (remaining carbon amount), the smaller the crushing strength of the solid reduced iron F as shown in FIG. 4. Thus, the solid reduced iron is easier to powder at the time of being discharged from the rotary hearth furnace 14 and being charged into the iron-melting furnace, thereby increasing a dust loss. Accordingly, a lower carbon content is preferable from a viewpoint of an iron yield and a carbon yield. Therefore, the upper limit of the carbon content of the solid reduced iron F is set at a maximum value within such a range that crushing strength is not excessively reduced. This upper limit is preferably 10 mass % or lower, more preferably 5 mass % or lower. The preferable lower limit of the carbon content of the solid reduced iron F is about 1.5 mass % which is necessary to metallize iron oxide (FeO, etc.) remaining in the solid reduced iron F if the metallization degree is 92 %.

If liquid coal is used as the powdery carbonaceous reducing agent B to be contained into the carbonaceous-material containing pellets D, the carbon content can be increased to as high as about 10 mass % while maintaining the strength of the solid reduced iron F. However, since the liquid coal is not abound and generally expensive, it is desirable to use coal having no fluidity and employ a production method for reducing the carbon content in the solid reduced iron F to 5 mass % or lower.

Such metallization degree and carbon content of the solid reduced iron F can be obtained by suitably adjusting the mixing ratio of the iron ore (iron oxide source) "a" and the coal (carbonaceous reducing agent) b in the carbonaceous-material containing pellets D, the thickness and the average particle diameter of the bedding carbonaceous material E, the atmospheric temperature of the rotary hearth furnace 14, the residence time of the carbonaceous-material containing pellets D in the rotary hearth furnace 14, and other factors.

### (3) Melting furnace charging step

The solid reduced iron F and the char G thus obtained are preferably taken out of the rotary hearth furnace 14 and intermittently charged into the iron-melting furnace 16 while being hot (in other words, while being at high temperature or without being substantially cooled). As one example of such a melting furnace charging means, the following hopper and containers may be used.

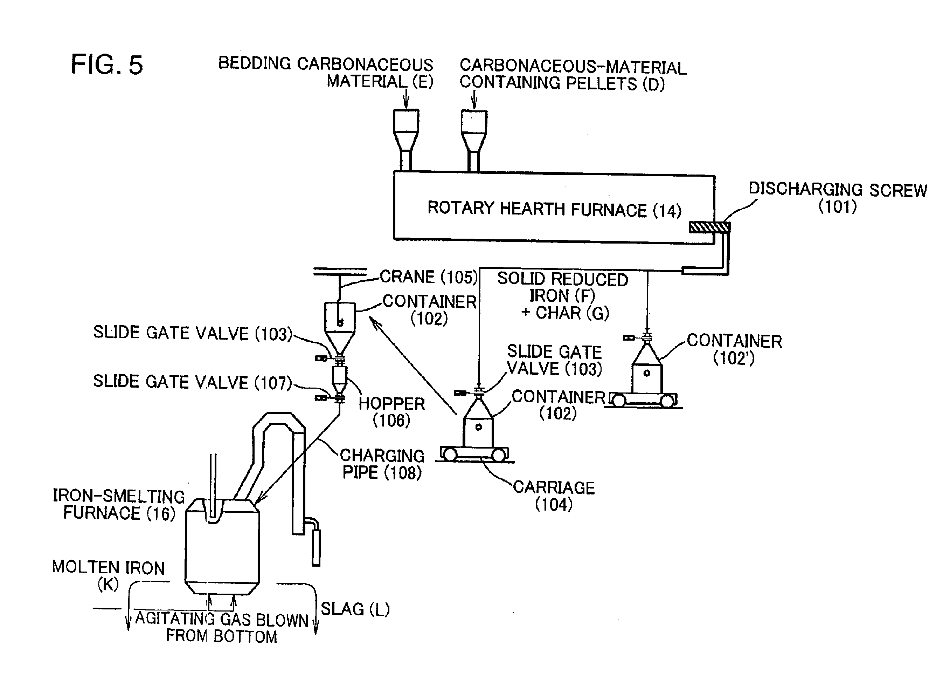

Specifically, as shown in FIG. 5, the solid reduced iron F and the char G are taken out together by means of a discharge screw 101 disposed at the exit of the rotary hearth furnace 14 and contained into a container 102 as a reduced iron containing means. When the container 102 becomes full, it is switched over to another empty container 102' and the container 102 is turned upside down by an unillustrated turning machine after a slide gate valve 103 disposed atop the full container 102 is closed, and is conveyed to a position above a hopper 106 as a reduced iron storing means disposed above the iron-melting furnace 16 by a carriage 104 and a crane 105. Here, the slide gate valve 103 is opened to transfer the solid reduced iron F and the char G in the container 102 to the hopper 106 to temporarily store them. At least the container 102 and the hopper 106 are coated with refractory because they charge the solid reduced iron F and the char G into the iron-melting furnace 16 while they are hot (in other words, being at high temperature or without being substantially cooled). The solid reduced iron F and the char G are intermittently dispensed together (without being separated) by opening and closing a slide gate valve 107 as an intermittent dispensing means disposed at the bottom of the hopper 106, and are charged into the iron-melting furnace 16 by dropping, taking advantage of gravity, via a charging pipe 108 (such intermittent charging method is referred to as a "batch charging method", whereas a continuous charging method normally employed is referred to as a "continuous charging method"). In order to avoid the reoxidation of the solid reduced iron F and the combustion of the char G upon separating the container 102 from the rotary hearth furnace 14 or upon transferring the content of the container 102 to the hopper 106, at least the container 102 and the hopper 106 are so constructed as to be purgeable by an inert gas such as a nitrogen gas. It should be noted that the solid reduced iron F and the char G are preferably charged in such a manner as not to touch the inner wall surface of the iron-melting furnace 16.

Another carbonaceous material H (hereinafter referred to as "additional carbonaceous material") to be added if the carbonaceous material consumption necessary in the iron-melting furnace 16 cannot be covered only by the auxiliary raw material I as the slag forming agent, the carbon content in the solid reduced iron F and the char G and the like (hereinafter referred to as "auxiliary raw material and other charged materials) is added in the iron-melting furnace 16 by a system different from the one for the solid reduced iron F and the char G. Since the solid reduced iron F, the char G, the auxiliary raw material and other charged materials adhere and deposit upon touching the inner wall surface of the iron-melting furnace 16, they are preferably charged in such a manner as not to touch the inner wall surface of the iron-melting furnace 16.

By charging the solid reduced iron F and the char G while being hot (being at high temperature or without being substantially cooled) in this way, solid sensible heat can be effectively recovered and the carbonaceous material consumption of the iron-melting furnace 16 can be reduced.

Further, by intermittently dispensing the solid reduced iron F and the char G and letting them drop in a mass into the iron-melting furnace 16 within a short period of time, a scattering rate of dust of the char G into an exhaust gas M can be reduced, wherefore the carbonaceous material yield in the entire process can be improved.

Specifically, if the solid particles made up of the solid reduced iron F and the char G are continuously charged as solid reduced iron has been conventionally continuously charged, there is a high probability that they separately drop because a solid mass feed rate per unit time is small. Thus, the char particles being lightweight and having small particle diameters are likely to get scattered into the exhaust gas by the flow of the gas produced from molten metal. Contrary to this, if the solid reduced iron F and the char G are intermittently charged together, the particles of the char G drop as aggregates together with other solid particles heavier and larger in particle diameter than the char because the solid mass feed rate per unit time is large. Thus, gas around the aggregates is caused to flow downward. As a result, the particles of the char G likely to scatter as single particles drop along the downward flow of the gas, wherefore the char particles prevail against the flow of the gas produced from the molten metal and added into the molten metal with a good yield without being scattered.

It is recommended to intermittently dispense the solid particles (solid reduced iron F and char G) (charge into the iron-melting furnace 16) at a frequency of 1 to 10 min., more preferably 2 to 5 min for the following reasons. Specifically, if the charging frequency is excessively increased, it becomes difficult to obtain the scatter preventing effect because the solid mass feed rate per unit time does not become sufficiently large. In addition, equipment troubles are likely to occur because the slide gate valve 107 is frequently opened and closed. On the other hand, if the charging frequency is excessively lessened, the scatter preventing effect is saturated. In addition, since a large amount of the solid reduced iron F and the char G are added at once, there arise problems that the iron-melting furnace 16 becomes difficult to control due to its large thermal fluctuation; the effect of recovering the solid sensible heat is reduced due to the temperature decreases of the solid reduced iron F and the char G upon being charged into the iron-melting furnace 16; and the capacity of the hopper 106 needs to be increased to thereby increase the plant cost.

The solid reduced iron F and the char G upon being charged into the iron-melting furnace 16 without being substantially cooled are made to have temperatures at which the solid reduced iron F and the char G discharged from the intermediate hoppers can be charged into the furnace 16 without causing thermal loads to the furnace 16 when being charged into the furnace 16, specifically 500°C to 1100°C.

For the following reasons, it is preferable that the temperatures of the solid reduced iron F and the char G upon being charged into the iron-melting furnace 16 are 500°C to 1100°C. If the temperatures are below 500°C the effect of recovering the solid sensible heat is small. On the other hand, if the temperatures are above 1100°C, the heat resistance of the discharge screw and the like become problematic and operation troubles are likely to occur.

If the carbonaceous material consumption necessary in the iron-melting furnace cannot be covered only by the carbon content of the solid reduced iron F and the char G, the additional carbonaceous material H may be additionally charged into the iron-melting furnace 16 as described above.

The average volatile matter content in all the carbonaceous material to be charged into the iron-melting furnace 16 (excluding carbon contained in the solid reduced iron F) is preferably 15 mass % or lower by dry weight. In the case of charging the additional carbonaceous material H, it is desirable to choose the kind of coal such that an average volatile matter content which is a weighted average of the volatile content of the additional carbonaceous material H and that of the char G (normally about 0 mass %) is 15 mass % by dry weight. If the average volatile matter content exceeds 15 mass %, gas-phase temperature excessively increases due to the combustion of the volatile content in the iron-melting furnace 16, thereby increasing a risk of damaging the refractory.

### (4) Melting step

The solid reduced iron F is molten to separate slag L by blowing an oxygen gas J as an oxygen-containing gas into the iron-melting furnace 16 by means of a plurality of lances as an oxygen blowing means to burn the carbonaceous material (char G, additional carbonaceous material H), whereby molten iron K can be obtained. It should be noted that the iron-melting furnace 16 may be of the inclining type or of the fixed type.

In this melting step, it is preferable to perform the melting on the condition of a secondary combustion ratio of 40%. If the secondary combustion ratio exceeds 40%, the effect of reducing the carbonaceous material consumption can be hardly confirmed when the metallization degree of the solid reduced iron F is 92 % or higher. In addition, the gas-phase temperature excessively increases to increase a risk of damaging the refractory, thereby increasing loads on the iron-melting furnace 16. A more preferable range of the secondary combustion ratio is 10 to 40 % at which the carbonaceous material consumption is sufficiently low, and a even more preferable range thereof is 15 to 30 % at which the loads on the iron-melting furnace 16 are further reduced.

### (5) Melting-furnace exhaust gas circulating step

Since the exhaust gas (melting-furnace exhaust gas) M in the iron-melting furnace 16 contains high concentrations of CO and H₂ components, it is desirable to feed at least a part of the exhaust gas M to the rotary hearth furnace 14 after cooling it and removing dust therefrom in a gas cooling/dust removing apparatus 24 and to use the exhaust gas as a fuel gas for the rotary hearth furnace 14 by adding an external fuel N if necessary.

As described above, according to the first embodiment, the hearth 32 is securely protected by using the bedding carbonaceous material E, thereby avoiding troubles such as the peeling of the hearth, with the result that the rotary hearth furnace 14 can be continuously operated over a long period of time. Further, the volatile content that is devolatized when the bedding carbonaceous material E is heated in the rotary hearth furnace 14 is effectively used as the fuel gas for the rotary hearth furnace together with at least a part of the exhaust gas, wherefore the fuel consumption of the rotary hearth furnace 14 can be reduced. Since the char G after the devolatization contains no volatile content, a damage of the refractory caused by the combustion of the volatile content in the iron-melting furnace 16 can be prevented, thereby extending the life of the refractory of the iron-melting furnace 16. Further, the reoxidation of the solid reduced iron F in the rotary hearth furnace 14 can be prevented by using the bedding carbonaceous material E, thereby achieving a high metallization degree of 92 % or higher to considerably reduce the carbonaceous material consumption in the iron-melting furnace 16. The entire process including the reduction and the melting can be made into an energetically self-contained process by adjusting the metallization degree of the solid reduced iron F, the consumed amount of the bedding carbonaceous material, and the amount of the volatile content of the bedding carbonaceous material E to conform the total heat quantity of the exhaust gas produced from the iron-melting furnace 16 to the heat quantity necessary and sufficient in the rotary hearth furnace 14. Further, the rate of scattering fine particles of the char G and the like into the exhaust gas can be reduced to improve the carbonaceous material yield in the entire process by intermittently dispensing the solid reduced iron F and the char G and letting them drop in a mass into the iron-melting furnace 16 from above within a short period of time.

### [Second Embodiment]

The following step (6) may be provided between the reduction step (the above step (2)) and the melting furnace charging step (the above step (3)).

### (6) Step of hot-forming the solid reduced iron F and the char G together while they are hot

Specifically, the solid reduced iron F and the char G may be dispensed together, for example, from the hopper 106 while being hot, and pressure-formed into hot briquetted iron (HBI) by a hot forming machine, and this HBI may be dropped and charged into the iron-melting furnace 16 at a temperature of, e.g. 500 to 1100°C without being cooled.

This prevents the fine particles from scattering at the time of being charged into the iron-melting furnace 16, and an amount of dust in the exhaust gas from the iron-melting furnace 16 can be considerably reduced. Therefore, an iron yield and a carbon yield can be considerably improved.

Since the purpose of forming here is to eliminate fine particles, the shape of the compacts is not limited to that of a briquette and the compacts may be plate-shaped aggregates or aggregates having irregular shapes. The compacts need not be strong unless they become fine particles again due to a handling impact until the charging into the iron-melting furnace 16.

### [Third Embodiment]

The following steps (7) to (9) may be provided instead of the melting furnace charging step (the above step (3)).
(7) Hot-classifying step of classifying the solid reduced iron F and the char G into coarse particles and fine particles while they are hot or without being substantially cooled after the solid reduced iron F and the char G are taken together out of the rotary hearth furnace 14.
(8) Coarse particle charging step of gravitationally charging coarse particles into the iron-melting furnace 16
(9) Fine particle injection step of charging the fine particles into the iron-melting furnace 16 by injection

Specifically, facilities having the following construction may be employed. A screen having sieve meshes of about 2 to 5 mm is provided at a portion of the rotary hearth furnace 14 where the solid reduced iron F and the char G are discharged, and the solid reduced iron F and the char G are sieved while being hot, wherein course particles above the sieve and fine particles below the sieve are temporarily stored in separate intermediate hoppers. The coarse particles are charged into the iron-melting furnace 16 from above at a temperature of, e.g. 500°C to 1100 °C by the gravitational drop. On the other hand, the fine particles are blown into the molten iron in the iron-melting furnace 16 and/or the molten slag formed on the molten iron via an injection lance and a tuyere provided at the furnace side of the iron-melting furnace 16 and/or at the bottom of the furnace using an inert gas such as N₂ as a carrier gas.

Since this causes the fine particles to be trapped in the molten iron and/or the molten slag, the scattering of the fine particles can be prevented at the time of charging into the iron-melting furnace 16 and the amount of dust in the exhaust gas from the iron-melting furnace 16 can be considerably reduced similar to the second embodiment. Therefore, an iron yield and a carbon yield can be considerably improved.

### [Fourth Embodiment]

The aforementioned melting step (4) is preferably performed as follows. Specifically, it is preferable to reduce a blowing rate of the oxygen gas (total blowing rate from a plurality of lances) at the time of charging the solid reduced iron F and the char G into the iron-melting furnace 16. This can reduce an amount of gas produced from the molten metal and further reduce the scattering amount of the char G.

In order to securely reduce the scattering amount of the char G, it is desirable to set the blowing rate (total amount) of the oxygen gas at the time of charging the solid reduced iron F and the char G at 80 % or lower, more preferably 60 % or lower of the blowing rate (total amount) of the oxygen gas when the solid reduced iron F and the char G are not charged. However, the blowing rate is desirably 30 % or higher since the combustion in the furnace may stop if the blowing rate is excessively reduced.

In this case, out of the plurality of lances, the oxygen blowing rate(s), for example, from some (one or a plurality of) lance(s) disposed near the position where the solid reduced iron F and the char G are charged may be preferentially reduced or stopped. This enables a local and considerable reduction of the amount of the gas produced from the molten metal near the position where the solid reduced iron F and the char G are charged. Therefore, the scattering amount of the char G can be even more reduced.

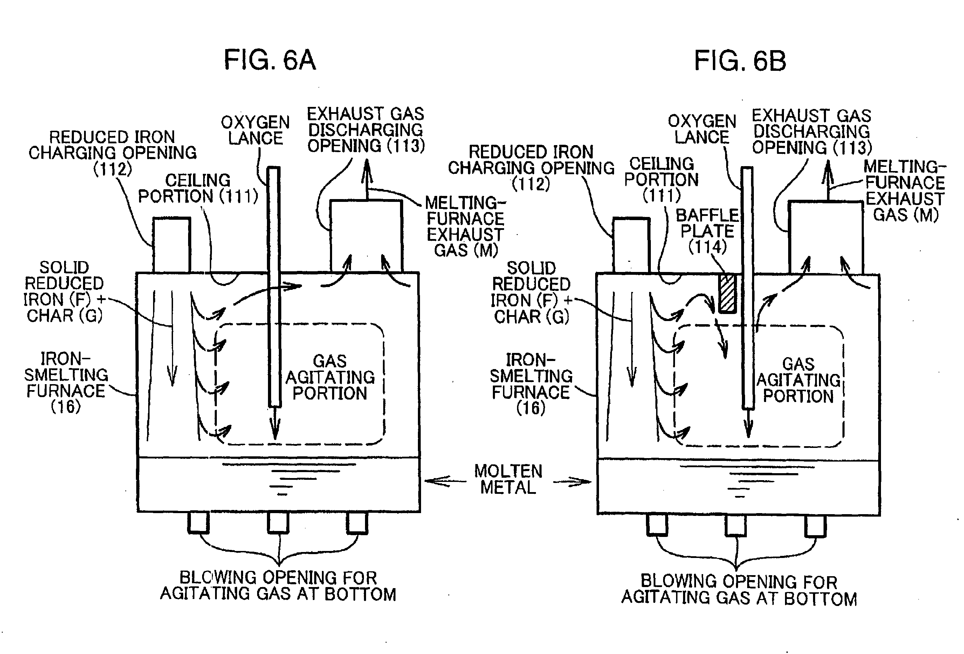

Further, it is preferable to dispose a baffle plate 114 between a reduced iron charging opening 112, which is a charging portion for the solid reduced iron F and the char G, and an exhaust gas discharging opening 113, which is a discharging portion for the exhaust gas (melting-furnace exhaust gas) from the iron-melting furnace 16 at a ceiling portion 111 of the iron-melting furnace 16 as shown in FIG. 6B. If no baffle plate 114 is disposed, the char G is likely to be discharged together with the melting-furnace exhaust gas M along the gas flow taking a shortcut from the reduced iron charging opening 112 to the exhaust gas discharging opening 113 along the ceiling portion 111 as shown in FIG. 6A. Contrary to this, if the baffle plate 114 is disposed, the gas flow from the reduced iron charging opening 112 along the ceiling portion 111 has its course diverted downward by the baffle plate 114 as shown in FIG. 6B. Thus, the char G carried by this gas flow can more easily reach the outer surface of the molten metal by the downward flow, thereby effectively suppressing the scattering of the char G into the melting-furnace exhaust gas M.

In this melting step as well, the melting is preferably performed on the condition of a secondary combustion ratio of 40 % or lower. A more preferable range of the secondary combustion ratio is 10 to 40 % at which the carbonaceous material consumption is sufficiently low, and an even more preferable range thereof is 15 to 30 % at which the loads on the iron-melting furnace 16 are further reduced.

### [Modifications]

Although the solid reduced iron and the char are intermittently charged into the iron-melting furnace together in the foregoing embodiments, they may be classified into the solid reduced iron and the char by a screen or the like while being hot after being taken out from the rotary hearth furnace and may be separately charged into the iron-melting furnace. In this case, it does not matter whether the solid reduced iron is charged continuously or intermittently, but the char is intermittently charged. However, it is more preferable to charge the char together with the solid reduced iron as in the first embodiment rather than to separately charge the char since the solid mass feed rate per unit time is larger in the former case and the scattering of the char can be more securely prevented.

Although the auxiliary raw material and the other charged materials are added into the iron-melting furnace by the system different from the one for the solid reduced iron and the char in the above example, they may be charged by the same system. In the case of classifying the solid reduced iron and the char and separately charging them into the iron-melting furnace, the auxiliary raw material and the other charged materials may be added to the char and charged together by the same system. It is more preferable to charge the char together with the auxiliary raw material and the other charged materials since the solid mass feed rate per unit time becomes larger and the scattering of the char can be more securely prevented.

Although the solid reduced iron F and the char G are charged using the container and the hopper both provided with the slide gate valve according to the illustrated batch charging method, the container may be dispensed with and the solid reduced iron F and the char G taken out from the rotary hearth furnace may be directly charged into the hopper provided with the slide gate valve and the solid reduced iron F and the char G may be intermittently dispensed by opening and closing the slide gate valve if the rotary hearth furnace and the iron-melting furnace can be installed proximate to each other.

In the above example, a reduction in the oxygen gas blowing rate at the time of charging the solid reduced iron and the char into the iron-melting furnace is accomplished by providing the iron-melting furnace with a plurality of lances and reducing or stopping the oxygen blowing rate from all or some of the lances. However, the iron-melting furnace may be provided with only one lance and the oxygen blowing rate from this lance may be reduced.

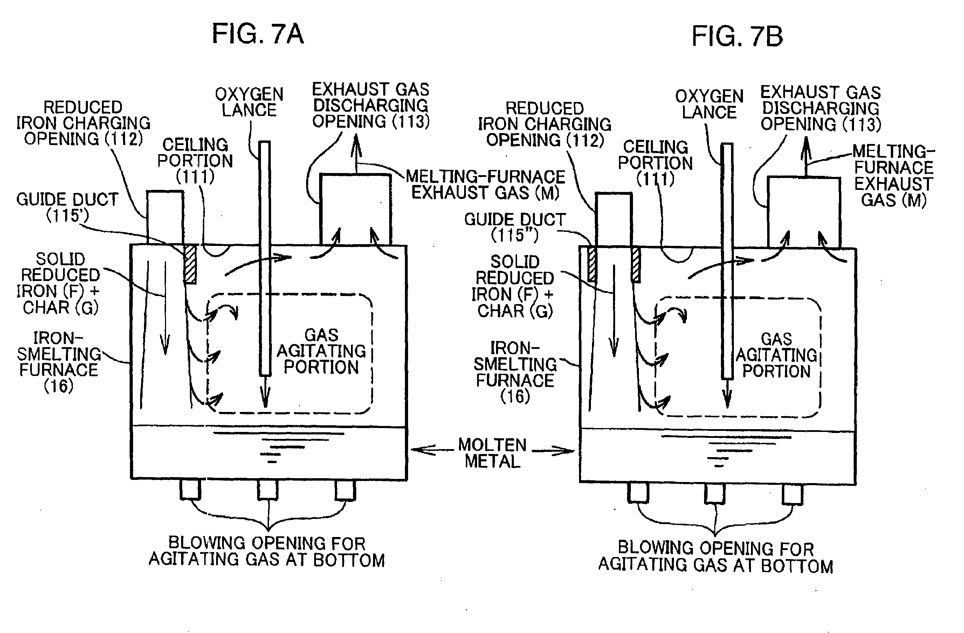

Although the baffle plate is disposed at the ceiling portion of the iron-melting furnace in the above example, guiding means 115 such as a guide plate 115' or a guide duct 115" may be disposed at the reduced iron charging opening 112 as shown in FIGS. 7A and 7B instead of or in addition to the baffle plate. The downward flow of the solid in the iron-melting furnace 16 can be ensured by these guiding means 115 to make it easier for the char G to reach the outer surface of the molten metal. This can prevent the char G from being trapped in the gas flow along the ceiling portion 111 and being discharged together with the melting-furnace exhaust gas M.

Although the iron ore is used as the iron oxide source in the above example, blast furnace dust, mill oxide and the like containing iron oxide may be concomitantly used. Further, matters containing nonferrous metals and their oxides together with iron oxide such as dust and slag discharged from a metal refinery may also be used.

Although coal is used as the carbonaceous reducing agent, the bedding carbonaceous material and the additional carbonaceous material in the above example, cokes, oil cokes, charcoals, wood chips, waste plastics, old tires and the like may also be used.

Although the carbonaceous-material containing pellets are used as carbonaceous-material composite agglomerates and granulated by the granulator in the above example, carbonaceous-material containing briquettes may be used instead of the carbonaceous-material containing pellets and may be molded by compression by a compression molding machine. In this case, depending on the kind of the binder, moisture may not be added and rather dried raw material may be used at the time of molding. Since the strength of the carbonaceous-material containing briquettes can be improved to suppress the bursting at the time of heating by increasing the compressive force of the compression molding machine, even a carbonaceous material containing a volatile content of 30 mass % or higher can also be used as the carbonaceous material to be contained.

Although a combination of the charging pipe and the dispersion screw are used as the means for feeding the bedding carbonaceous material to the hearth in the above example, the bedding carbonaceous material may be dispersed on the hearth by a vibratory feeder.

Although the oxygen gas is used as the oxygen-containing gas in the above example, high-temperature air or oxygen-enriched high-temperature air may be used.

Although the rotary hearth furnace is used as the moving furnace type reducing furnace in the above example, a linear furnace may be used.

Although the carbonaceous material as the energy source for the iron-melting furnace is burnt with the oxygen-containing gas in the above example, an electric energy may be used.

Although the screen is used as the classifying means in the hot-classifying step in the above example, means for classifying the particles based on differences in travel caused by the particle size by letting them drop from a slant surface to a free space or means for classifying the particles by the fluid beds may also be used.

### [Example-1]

Test operations were conducted on conditions shown in TABLE-2 for a case where the bedding carbonaceous material was used (Inventive Examples 1, 2) and for a case where no bedding carbonaceous material was used (Comparative Example 1), using iron ire and coal having chemical compositions shown in TABLE-1 with respect to the flow diagram of the process shown in FIG. 1, and operation results written also in TABLE-2 were obtained. Here, Inventive Example 1 was an example where only the char derived from the bedding carbonaceous material is charged into the iron-melting furnace without using the additional carbonaceous material at all; Inventive Example 2 is an example where the additional carbonaceous material was charged into the iron-melting furnace in addition to the char derived from the bedding carbonaceous material; and Comparative Example 1 is an example where all the carbonaceous materials (excluding carbon contained in the solid reduced iron) to be charged into the iron-melting furnace were directly charged into the iron-melting furnace without via the rotary hearth furnace. As a reference, items of the total coal consumptions of the rotary hearth furnace and the iron-melting furnace shown in the column of the operation results of TABLE-2 are shown in TABLE-3. In this test operations, the iron ore was crushed into particles of smaller than 1 mm; and the coal had its particle size adjusted by a combination of operations of sieving and crushing and the coal particles having particle diameters of smaller than 1 mm was used as the carbonaceous reducing agent, those having particle diameters of 1 to 5 mm (average particle diameter: 2.2 mm) as the carbonaceous material and those having particle diameters of larger than 5 mm as the additional carbonaceous material in any of Inventive Examples 1, 2 and Comparative Example 1. A range of the particle diameters of the carbonaceous-material containing pellets D was set to be 6 to 20 mm, and the number of layers of the carbonaceous-material containing pellets D to be placed on the hearth was set at 0.9 layer on the average.

**TABLE-1**

| | | | | | |
|---|---|---|---|---|---|
| IRON ORE | T.Fe | FeO | SiO₂ | Al₂O₃ | CaO |
| | 67.2 | 26.9 | 5.7 | 0.4 | 0.1 |
| COAL | Fixed Carbon | Volatile | Ash | logMF | |
| | 74.0 | 15.9 | 10.1 | 0.0 | |

**TABLE-2**

| | OPERATION CONDITIONS | | | | OPERATION RESULTS | | | |
|---|---|---|---|---|---|---|---|---|
| | Rotary Hearth Furnace | | | Iron-Melting Furnace | Solid Reduced Iron | | Average Volatile Matter Content of Charges into Iron- Melting Furnace (mass %) | Total Coal consumption of Rotary Hearth Furnace and Iorn Melting Furnace (kg/thm) |
| | Thickness of Bedding Carbonaceous material (mm) | Atm. Temp. (0C) | Residence Time of Pellets (min) | Secondary Combustion Ratio (%) | Metallizatio n Degree (%) | Carbon Content (mass %) | | |
| INVENTIVE EXAMPLE 1 | 4 | 1350 | 8 | 15 | 95 | 4.0 | <1 | 648 |
| INVENTIVE EXAMPLE 2 | 1.3 | 1350 | 8 | 14 | 95 | 4.0 | 11.9 | 685 |
| COMPARATIV E EXAMPLE 1 | - | 1350 | 8 | 10 | 85 | 4.0 | 15.9 | 835 |

**TABLE-3**

| (unit: kg/thm) | | | | |
|---|---|---|---|---|
| | CARBONACEOUS MATERIAL AMOUNT IN PELLETS | BEDDING CARBONACEOUS MATERIAL AMOUNT | ADDITIONAL CARBONACEOUS MATERIAL AMOUNT OR DIRECTLY CHARGED CARBONACEOUS MATERIAL AMOUNT | TOTAL COAL CONSUMPTION |
| INVENTIVE EXA. 1 | 425 | 223 | 0 | 648 |
| INVENTIVE EXA. 2 | 425 | 74 | 186 | 685 |
| COMPARATIVE EXA. 1 | 425 | 0 | 410 | 835 |

As shown in TABLE-2, as compared to Comparative Example 1 in which no carbonaceous material was used, the metallization degree of the solid reduced iron increased from 85 % (below 90 %) to 95 % (above 92 %) and the total coal consumptions of the rotary hearth furnace and the iron-melting furnace could be reduced by 150 kg to 187 kg per ton of the molten iron.

Although the rotary hearth furnace needs to be regularly stopped operating in order to scrape off the deposit on the outer surface of the hearth for the protection of the hearth of the rotary hearth furnace in Comparative Example 1, the formation of the deposit on the outer surface of the hearth was hardly confirmed in Inventive Examples 1, 2 and the rotary hearth furnace needed not be stopped for such a purpose.

Further, as compared to Comparative Example 1, the average volatile matter content of the carbonaceous material (char + addition carbonaceous material) to be charged into the iron-melting furnace could be reduced from 15.9 mass % (above 15 mass %) to 1.9 mass % or below 1 mass % (below 15 mass %); an apparent reduction in the temperature of the upper iron coating of the iron-melting furnace was recognized; and the effect of reducing the heat load was recognized.

### [Example 2]

### [1: Effect brought about by the reduced oxygen gas blowing rate at the time of charging solid particles]

First, in order to confirm the effect brought about by the reduced oxygen gas blowing rate at the time of charging the solid particles (solid reduced iron and char), a mathematical model simulating the iron-melting furnace (including neither the baffle plate nor the guiding means) having the construction shown in FIG. 6A was prepared, and a simulation calculation was carried out to predict the scattering rate of the solid particles into the exhaust gas.

### (Calculation Conditions)

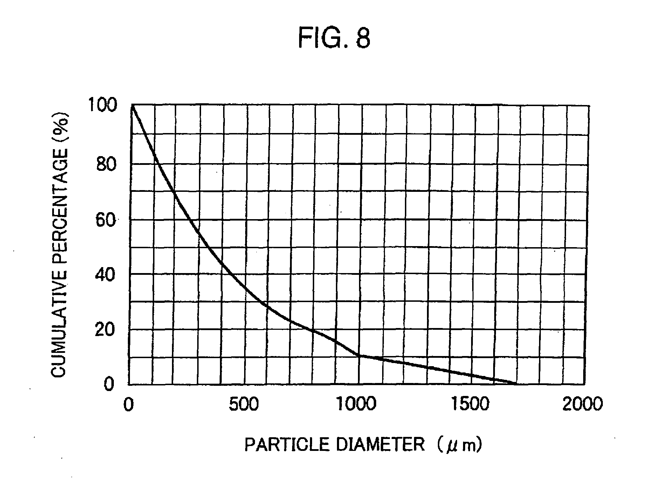

- Dimensions of the iron-melting furnace: inner diameter = 2.0 m (constant along height direction), free board height = 2.0 m
- Inner diameter of the reduced iron charging opening: 0.4 m
- Inner diameter of the exhaust gas discharging opening: 0.8 m
- Apparent density of the solid particles: 1.4 g/cm³ (see note below)
- Particle size distribution of the solid particles: FIG. 8 (see note below)
- Charging rate of the solid particles: 300 kg/h (at the time of continuous charging)
- Oxygen blowing rate: 800 Nm³/h (normal operation = period during which no solid particle is charged)
- Melting-furnace exhaust gas amount: 1700 Nm³/h
- Melting-furnace exhaust gas temperature: 1650°C
- Amount of gas produced per unit cross section of the outer surface of the molten metal is assumed to be constant

### (Notes)

Although the scattering rate of the solid particles changes depending on their apparent density and particle size distribution, the apparent density of the solid particles was set to be 1.4 g/cm³ and the particle size distribution thereof was set to be one shown in FIG. 8 in this simulation calculation.

In the case of charging the solid reduced iron and the char together, the mass ratio of the solid reduced iron to the char forming the solid particles is about 90:10 to 80:20; the apparent density of the solid reduced iron is 2 to 3 g/cm³ and that of the char is about 1.0 g/cm³; and the solid particles are assumed to contain about 4 mass % of the particles having diameters of 1 mm or shorter.

### (Calculation Results)

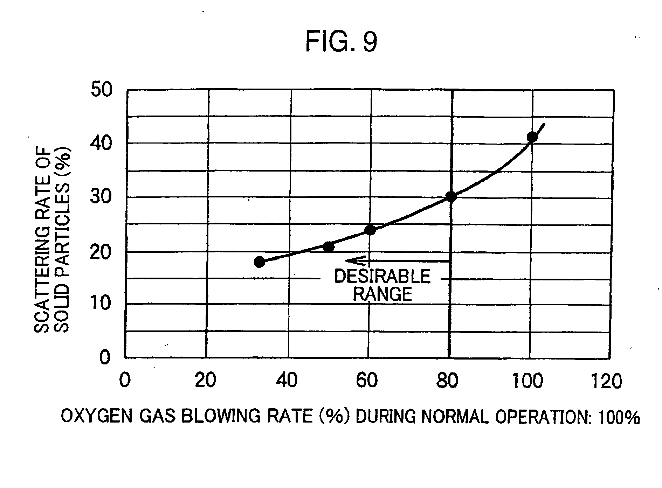

For the case of continuously charging the solid particles, a simulation calculation was conducted by successively reducing the oxygen gas blowing rate from 100% to 30% with the oxygen gas blowing rate during the normal operation set at 100%. The calculation results are shown in FIG. 9. It can be confirmed from FIG. 9 that the scattering rate of the solid particles was reduced to 30.3 % or lower by reducing the oxygen gas blowing rate to 80 % or lower although it was 41.7 % at the oxygen gas blowing rate of 100 %, i.e. improved by 10 % or more. Here, the scattering rate of the solid particles is a value expressing a ratio (%) of the mass of the solid particles scattered into the exhaust gas to the total mass of the solid particles charged into the iron-melting furnace.

### [2: Effect brought about by the batch charging method]

Since it was difficult to confirm the influence of the batch charging by the simulation calculation, a cold model of the iron-melting furnace corresponding to the above mathematical model was fabricated and the above influence was confirmed by a model experiment.

The model experiment was carried out by variously changing the charging frequency of the solid particles and the oxygen gas blowing rate for the case of intermittently charging the solid particles based on the case of continuously charging the solid particles. The experiment results are shown in TABLE-4. As is clear from TABLE-4, it was confirmed that the scattering rate of the solid particles was reduced from 33.4 % to 20.1 to 22.3 % even without reducing the oxygen gas blowing rate by intermittently charging the solid particles at regular time intervals and was further reduced to 8.6 to 8.9 % by reducing the oxygen gas blowing rate simultaneously with the intermittent charging.

**TABLE-4**

| CHARGING METHOD | CONTINUOUS | BATCH | | | |
|---|---|---|---|---|---|
| CHARGING FREQUENCY | - | Every 2 min. | Every 5 min. | Every 2 min. | Every 5 min. |
| O₂ GAS BLOWING RATE | 100 % | 100 % | 100 % | 50% | 50 % |
| SCATTERING RATE | 33.4 % | 22.3 % | 20.1 % | 8.9 % | 8.6 % |

### [EXAMPLE 3]

Test operations were conducted on conditions shown in TABLE-5 for a case where the solid reduced iron and the char were intermittently charged every 5 min. (Inventive Examples 3, 4) and for a case where the solid reduced iron and the char were continuously charged (Comparative Example 2), using iron ire and coal having chemical compositions shown in TABLE-1 and using the bedding carbonaceous material in the rotary hearth furnace. In any of Inventive Examples 3, 4 and Comparative Example 2, the solid reduced iron and the char were charged together into the iron-melting furnace, but the auxiliary raw material and the additional carbonaceous material were charged by a system different from the one for the solid reduced iron and the char. Further, neither the baffle plate nor the guiding means was provided in the iron-melting furnace. The operation results are written in TABLLE-5. As shown in TABLE-5, the operation conditions of the rotary hearth furnace and the secondary combustion ratio of the iron-melting furnace were the same in Inventive Examples 3, 4 and Comparative Example 2, but the operation could be carried out by only charging the char derived from the bedding carbonaceous material into the iron-melting furnace without using the additional carbonaceous material at all in Inventive Examples 3, 4, but the additional carbonaceous material needed to be charged in addition to the char in Comparative Example. As a reference, items of the total coal consumptions of the rotary hearth furnace and the iron-melting furnace shown in the columns of the operation results of TABLE-5 are shown in TABLE-6. In these test operations, the iron ore was crushed into particles of smaller than 1 mm; and the coal had its particle size adjusted by a combination of operations of sieving and crushing and the coal particles having particle diameters of smaller than 1 mm was used as the carbonaceous reducing agent, those having particle diameters of 1 to 5 mm (average particle diameter: 2.2 mm) as the carbonaceous material and those having particle diameters of larger than 5 mm as the additional carbonaceous material in any of Inventive Examples 3, 4 and Comparative Example 2. A range of the particle diameters of the carbonaceous-material containing pellets D was set to be 6 to 20 mm, and the number of layers of the carbonaceous-material containing pellets D to be placed on the hearth was set at 0.9 layer on the average.

**TABLE-5**

| | OPERATION CONDITIONS | | | | | OPERATION RESULTS | | | |
|---|---|---|---|---|---|---|---|---|---|
| | Rotary Hearth Furnace | | | Iron-Melting Furnace | | Solid Reduced Iron | | Carbon Content in Exhaust Gas Dust from Iron-Melting Furnace (kg/thm) | Total Coal Consumption of Rotary Hearth Furnace and Iron-Melting Furnace (kg/thm) |
| | Thickness of Bedding Carb. Material (mm) | Atm. Temp. (0C) | Residence Time of Pellets (min) | 2nd. Comb. Ratio (%) | Solid Reduced Iron & Char Charging Method | Metal. Degree (%) | Carbon Content (mass %) | | |
| INVENTIVE EXAMPLE 3 | 4 | 1350 | 8 | 15 | Batch: Every 5 min. O₂ Blowing Rate: 50%^{*1} | 95 | 4.0 | 13 | 648 |
| INVENTIVE EXAMPLE 4 | 4 | 1350 | 8 | 15 | Batch: Every 5 min. O₂ Blowing Rate: 100%*2 | 95 | 4.0 | 33 | 675 |
| COMPARATIV E EXAMPLE 2 | 4 | 1350 | 8 | 15 | Continuous | 95 | 4.0 | 50 | 697 |

| | | | | | | | | | |
|---|---|---|---|---|---|---|---|---|---|
| *1: The O₂ blowing rate is set at 50% in the period of 30 seconds after starting charging of solid particles. *2: The O₂ blowing rate is maintained at 100% at the time of charging solid particles. | | | | | | | | | |

**TABLE-6**

| (unit: kg/thm) | | | | |
|---|---|---|---|---|
| | CARBONACEOUS MATERIAL AMOUNT IN PELLETS | BEDDING CARBONACEOUS MATERIAL AMOUNT | ADDITIONAL CARBONACEOUS MATERIAL AMOUNT | TOTAL COAL CONSUMPTION |
| INVENTIVE EXA. 3 | 425 | 223 | 0 | 648 |
| INVENTIVE EXA. 4 | 425 | 223 | 27 | 675 |
| COMPARATIVE EXA. 2 | 425 | 223 | 49 | 697 |

As shown in TABLE-5, as compared with Comparative Example 2 employing the continuous charging method, the effect of improving a carbonaceous material yield could be confirmed in Inventive Example 4 employing the batch charging method according to which the oxygen blowing rate was not reduced at the time of charging the solid particles. In Inventive Example 3 employing the batch charging method according to which the oxygen blowing rate was reduced at the time of charging the solid particles, the carbon content contained in the dust in the exhaust gas from the iron-melting furnace was reduced from 50 kg to 13 kg per ton of the molten iron, thereby considerably improving the carbonaceous material yield. Further, as shown in TABLE-6, the total coal consumption of the rotary hearth furnace and the iron-melting furnace could be reduced by 49 kg per ton of the molten iron by making the use of the additional carbonaceous material unnecessary.

As described above, the inventive method for producing molten iron using the molten iron producing process constructed by combining the moving hearth type reducing furnace and the iron-melting furnace is characterized by comprising the following steps (1) to (4):
(1) Reducing furnace charging step of charging the bedding carbonaceous material onto the hearth of the moving hearth type reducing furnace and placing the carbonaceous-material composite agglomerates containing the powdery iron oxide source and the powdery carbonaceous reducing agent on the bedding carbonaceous material;
(2) Reduction step of moving the hearth inside the moving hearth type reducing furnace to heat and reduce the carbonaceous-material composite agglomerates to the solid reduced iron and heating and drying the carbonaceous material by distillation into char;
(3) Melting-furnace charging step of charging the solid reduced iron and the char into the iron-melting furnace while they are hot or without being substantially cooled; and
(4) Melting step of blowing the oxygen-containing gas into the iron-melting furnace to melt the solid reduced iron, thereby obtaining the molten iron.

According to this method, the hearth can be more securely protected by using the bedding carbonaceous material to avoid troubles of the peeling of the hearth, therefore the moving hearth type reducing furnace can be continuously operated for a longer period of time. Since the devolatized char has no volatile content, the damage of the refractory by the combustion of the volatile content in the iron-melting furnace can be prevented, thereby extending the life of the refractory of the iron-melting furnace. Further, the reoxidation of the solid reduced iron in the moving hearth type reducing furnace is prevented by using the bedding carbonaceous material to achieve a high metallization degree, therefore the carbonaceous material consumption in the iron-melting furnace can be considerably reduced. As a result, the carbonaceous material consumption can be further reduced while the operations of the moving hearth type reducing furnace and the iron-melting furnace can be more stabilized.

Further, according to the inventive method, a high metallization degree of 92 % or above can be achieved.

According to the inventive method, at least a part of the exhaust gas from the iron-melting furnace can be used as a fuel gas for the moving hearth type reducing furnace. By doing this, the volatile content devolatized upon heating the bedding carbonaceous material in the moving hearth type reducing furnace is effectively used as the fuel for the moving hearth type reducing furnace together with at least a part of the exhaust gas from the iron-melting furnace, thereby reducing the fuel consumption of the moving hearth type reducing furnace.

Further, according to the inventive method, another carbonaceous material can be additionally charged into the iron-melting furnace in the above step (3). By doing so, the case where the carbonaceous material consumption required by the iron-melting furnace cannot be covered only by the carbon content in the solid reduced iron F and the char G can also be coped with.

Furthermore, according to the inventive method, the hot-molding step of molding the solid reduced iron and the char while they are hot may be provided between the above steps (2) and (3). By doing so, the scattering of the fine particles at the time of charging into the iron-melting furnace can be prevented and the amount of dust in the exhaust gas from the iron-melting furnace can be considerably reduced. Therefore, the iron yield and the carbon yield can be considerably improved.

Further, the inventive method may comprise the following steps (7) to (9) instead of the above step (3):
(7) Hot-classifying step of classifying the solid reduced iron and the char into coarse and fine particles while they are hot or without being substantially cooled after taking them together out of the moving hearth type reducing furnace;
(8) Coarse particle charging step of gravitationally charging the coarse particles into the iron-melting furnace; and
(9) Fine particle injection step of charging the fine particles into the iron-melting furnace by injection.

Since the fine particles are trapped in the molten iron and/or the molten slag by these steps, the scattering of the fine particles at the time of charging into the iron-melting furnace can be prevented and the amount of dust in the exhaust gas from the iron-melting furnace can be considerably reduced. Therefore, the iron yield and the carbon yield can be considerably improved.

In the step (3) of the inventive method, the solid reduced iron and the char may be charged into the iron-melting furnace from above while being hot. By doing so, the scattering rate of the fine particles of the char and the like into the exhaust gas can be reduced, therefore the carbonaceous material yield can be improved in the entire process.

The method for charging the solid reduced iron and the char into the iron-melting furnace from above while they are hot may be a method according to which the char and the solid reduced iron are discharged from the moving hearth type reducing furnace, stored in the container, conveyed to the hopper disposed above the iron-melting furnace from the container and consequently charged into the iron-melting furnace while being hot by being intermittently dispensed from the hopper or a method according to which the char and the solid reduced iron are discharged from the moving hearth type reducing furnace, stored in the hopper and consequently charged into the iron-melting furnace while being hot by being intermittently dispensed from the hopper.

## Claims

1. A molten iron producing method for producing molten iron using a molten iron production process constructed by combining a moving hearth type reducing furnace and an iron-melting furnace, comprising the steps (1) to (4):
(1) reducing furnace charging step of charging a bedding carbonaceous material onto a hearth of the moving hearth type reducing furnace and placing carbonaceous-material composite agglomerates containing a powdery iron oxide source and a powdery carbonaceous reducing agent on the bedding carbonaceous material;
(2) reduction step of moving the hearth inside the moving hearth type reducing furnace, thereby heating and reducing the carbonaceous-material composite agglomerates to solid reduced iron and heating and drying the bedding carbonaceous material by distillation into char;
(3) melting furnace charging step of charging the solid reduced iron and the char into the iron-melting furnace without being substantially cooled; and
(4) melting step of blowing an oxygen-containing gas into the iron-melting furnace to melt the solid reduced iron into the molten iron.

2. A molten iron producing method according to claim 1, wherein the carbonaceous-material composite agglomerates are heated and reduced to the solid reduced iron having a metallization degree of 92 % or higher in the step (2).

3. A molten iron producing method according to claim 1 or 2, wherein the following step (5) is provided after the step (4):
(5) exhaust gas circulating step of using at least a part of an exhaust gas from the iron-melting furnace as a fuel gas for the moving hearth type reducing furnace.

4. A molten iron producing method according to any one of claims 1 to 3, wherein the carbon content of the solid reduced iron is 10 mass % or lower in the step (2).

5. A molten iron producing method according to any one of claims 1 to 4, wherein the melting is performed on the condition of a secondary combustion ratio of 40 % or lower in the step (4).

6. A molten iron producing method according to any one of claims 1 to 5, wherein the thickness of the bedding carbonaceous material charged onto the hearth is 1 to 10 mm.

7. A molten iron producing method according to any one of claims 1 to 6, wherein the average particle diameter of the bedding carbonaceous material is 1 to 5 mm.

8. A molten iron producing method according to any one of claims 1 to 7, wherein the Giesler's maximum fluidity MF of the bedding carbonaceous material satisfies a relationship of log MF equal or lower than 2.

9. A molten iron producing method according to any one of claims 1 to 8, wherein the volatile content of the bedding carbonaceous material is 10 mass % or higher by dry weight.

10. A molten iron producing method according to any one of claims 1 to 9, wherein the volatile content of the bedding carbonaceous material is 50 mass % or lower by dry weight.

11. A molten iron producing method according to any one of claims 1 to 10, wherein another carbonaceous material is additionally charged into the iron-melting furnace in the step (3) .

12. A molten iron producing method according to any one of claims 1 to 11, wherein the average volatile matter content of all the carbonaceous materials charged into the iron-melting furnace is 15 mass % or lower by dry weight with the carbon contained in the solid reduced iron excluded.

13. A molten iron producing method according to any one of claims 1 to 12, wherein the following step (6) is provided between the steps (2) and (3):
(6) hot-molding step of molding the solid reduced iron and the char without being substantially cooled.

14. A molten iron producing method according to any one of claims 1 to 13, wherein the temperatures of the solid reduced iron and the char are 500°C to 1100°C in the step (3).

15. A molten iron producing method according to any one of claims 1 to 12, wherein the following steps (7) to (9) are provided instead of the step (3):
(7) hot-classifying step of classifying the solid reduced iron and the char into coarse particles and fine particles without being substantially cooled after taking the solid reduced iron and the char together from the moving hearth type reducing furnace,
(8) coarse particle charging step of gravitationally charging the coarse particles into the iron-melting furnace, and
(9) fine particles injection step of charging the fine particles into the iron-melting furnace by injection.

16. A molten iron producing method according to claim 15, wherein the temperature of the coarse particles is 500°C to 1100°C in the step (8).

17. A molten iron producing method according to any one of claims 1 to 14, wherein the solid reduced iron and the char are charged into the iron-melting furnace from above without being substantially cooled in the step (3).

18. A molten iron producing method according to claim 17, wherein the char is charged into the iron-melting furnace together with the solid reduced iron and/or auxiliary raw material and other charged materials in the step (3).

19. A molten iron producing method according to claim 17, wherein the char and the solid reduced iron are discharged from the moving hearth type reducing furnace, stored in a container, conveyed from the container to a hopper disposed above the iron-melting furnace and consequently charged into the iron-melting furnace without being substantially cooled by being intermittently dispensed from the hopper in the step (3).

20. A molten iron producing method according to claim 17, wherein the char and the solid reduced iron are discharged from the moving hearth type reducing furnace, temporarily stored in a hopper disposed above the iron-melting furnace and consequently charged into the iron-melting furnace without being substantially cooled by being intermittently dispensed from the hopper in the step (3).

21. A molten iron producing method according to any one of claims 17 to 20, wherein a rate of blowing the oxygen-containing gas into the iron-melting furnace is reduced at the time of charging the char in the step (3).

22. A molten iron producing method according to claim 21, wherein the rate of blowing the oxygen-containing gas into the iron-melting furnace at the time of charging the char is 80% or less of the one when the char is not charged.

23. A molten iron producing method according to claim 21 or 22, wherein a plurality of lances are provided to blow the oxygen-containing gas, and the blowing rate from some of the lances is reduced or the blowing therefrom is stopped.

24. A molten iron producing apparatus constructed by combining a moving hearth type reducing furnace and an iron-melting furnace, comprising the following means (1) to (5):
(1) bedding carbonaceous material charging means for charging a bedding carbonaceous material onto a hearth of the moving hearth type reducing furnace;
(2) raw material charging means for placing carbonaceous-material composite agglomerates containing a powdery iron oxide source and a powdery carbonaceous reducing agent on the bedding carbonaceous material;
(3) heating means for heating and reducing the carbonaceous-material composite agglomerates to solid reduced iron and heating and drying the bedding carbonaceous material by distillation into char while the hearth is moved inside the moving hearth type reducing furnace;
(4) melting furnace charging means for charging the solid reduced iron and the char into the iron-melting furnace from above without being substantially cooled, at least the char being intermittently charged; and
(5) oxygen blowing means for blowing an oxygen-containing gas into the iron-melting furnace to melt the solid reduced iron into the molten iron.

25. A molten iron producing apparatus constructed by combining a moving hearth type reducing furnace and an iron-melting furnace, comprising the following means (1) to (6):
(1) bedding carbonaceous material charging means for charging a bedding carbonaceous material onto a hearth of the moving hearth type reducing furnace;
(2) raw material charging means for placing carbonaceous-material composite agglomerates containing a powdery iron oxide source and a powdery carbonaceous reducing agent on the bedding carbonaceous material;
(3) heating means for heating and reducing the carbonaceous-material composite agglomerates into solid reduced iron and heating and drying the bedding carbonaceous material by distillation while the heat is moved inside the moving hearth type reducing furnace;
(4) reduced iron containing means for containing the solid reduced iron and the char discharged from the moving hearth type reducing furnace without being substantially cooled;
(5) reduced iron storing means disposed above the iron-melting furnace for temporarily storing the solid reduced iron and the char conveyed from the reduced iron containing means and including intermittent dispensing means for intermittently dispensing and charging the solid reduced iron and the char into the iron-melting furnace without being substantially cooled; and
(6) oxygen blowing means for blowing an oxygen-containing gas into the iron-melting furnace to melt the solid reduced iron into the molten iron.

26. A molten iron producing apparatus constructed by combining a moving hearth type reducing furnace and an iron-melting furnace, comprising the following means (1) to (5):
(1) bedding carbonaceous material charging means for charging a bedding carbonaceous material onto a hearth of the moving hearth type reducing furnace;
(2) raw material charging means for placing carbonaceous-material composite agglomerates containing a powdery iron oxide source and a powdery carbonaceous reducing agent on the bedding carbonaceous material;
(3) heating means for heating and reducing the carbonaceous-material composite agglomerates into solid reduced iron and heating and drying the bedding carbonaceous material by distillation while the heat is moved inside the moving hearth type reducing furnace;
(4) reduced iron storing means for temporarily storing the solid reduced iron and the char discharged from the moving hearth type reducing furnace, the reduced iron storing means including intermittent dispensing means for intermittently dispensing and charging the solid reduced iron and the char into the iron-melting furnace without being substantially cooled; and
(5) oxygen blowing means for blowing an oxygen-containing gas into the iron-melting furnace to melt the solid reduced iron into the molten iron.

27. A molten iron producing apparatus according to any one of claims 24 to 26, wherein a baffle plate for suppressing the scattering of the char into an exhaust gas is provided between a charging portion for the char and a discharging portion for discharging the exhaust gas from the iron-melting furnace at a ceiling portion of the iron-melting furnace.

28. A molten iron producing apparatus according to any one of claims 24 to 27, wherein guiding means for guiding the char to the outer surface of molten metal in the iron-melting furnace is provided at the charging portion for the char.
